# EUROPÄISCHE PATENTSCHRIFT

(11) **EP 4 615 614 B1**
(45) Veröffentlichungstag und Bekanntmachung des Hinweises auf die Patenterteilung: **25.03.2026**
(21) Anmeldenummer: 23798430.7
(22) Anmeldetag: 26.10.2023
(51) Int. Cl.: B01D 53/04, B60H 3/06, B01D 53/10, F24F 1/02

(54) **NOXREDUKTION IM FAHRZEUGINNENRAUM**
NOX REDUCTION IN A VEHICLE INTERIOR
RÉDUCTION DE NOX DANS UN INTÉRIEUR DE VÉHICULE

(30) Priorität: 09.11.2022 DE 102022129539
(43) Veröffentlichungstag der Anmeldung: 17.09.2025
(73) Patentinhaber: AUDI AG, 85057 Ingolstadt (DE)
(72) Erfinder: MÜLLER-HELLWIG, Simone, 85051 Ingolstadt (DE); SEIFERT, Hagen, 93049 Regensburg (DE); KRAJETE, Alexander, 4061 Pasching (AT); WILKE, Bodo, 85122 Hitzhofen (DE)
(86) Internationale Anmeldenummer: PCT/EP2023/079984
(87) Internationale Veröffentlichungsnummer: WO 2024/099791

(56) Entgegenhaltungen:
- DE-A1- 102019 104 148
- DE-A1- 2 820 313
- DE-A1- 3 028 433
- FR-A1- 2 830 462
- JP-A- 2012 200 592
- US-A1- 2015 375 602

## Beschreibung

Die Erfindung betrifft eine Filtereinheit zur Entfernung von Stickoxiden aus Luft, eine Anordnung zur Reduktion des Stickoxidgehaltes der Luft in einem geschlossenen Raum, ein die Anordnung umfassendes Kraftfahrzeug sowie ein Verfahren zur Entfernung von Stickoxiden aus der Luft in einem geschlossenen Raum.

Aktuell gibt es nur sehr eingeschränkte Möglichkeiten, um Abgasbestandteile im Fahrzeuginnenraum, beispielsweise aus voranfahrenden Fahrzeugen, zu reduzieren. Eine Möglichkeit ist die "Umlufteinstellung" an der Klimaanlage. Damit wird verhindert, dass viel Luft von außen angesaugt wird. Eine andere Möglichkeit ist die Nutzung der HEPA / Aktivkohlefilter, die bereits in einigen Fahrzeugen verbaut sind. Beide technischen Lösungen sind allerdings nur eingeschränkt für die NOₓ-Reduktion einsetzbar.

Der Nachteil der "Umlufteinstellung" ist, dass sich sehr schnell Schadstoffe, wie CO₂ und NOₓ in der Innenraumluft anreichern, daher ist dies nur eine zeitlich sehr begrenzte Maßnahme. Darüber hinaus steigt auch die Luftfeuchtigkeit schnell an. HEPA Filter in Kombination mit Aktivkohlefilter haben zwar eine filternde Wirkung, jedoch haben viele Filter nur eine sehr begrenzte Kapazität und die beladenen Filter müssen ausgetauscht werden, das beladene Material kann nicht wiederverwertet werden.

Die DE 198 38 996 A1 betrifft eine Klimaanlage mit einem Aktivkohlefilter zur Reinigung der dem Innenraum eines Kraftfahrzeuges zugeführten Luft. Es ist eine Einrichtung zur Reinigung durch Erwärmung des Filters und der in ihm befindlichen Luft vorgesehen und die mit Abfallprodukten belastete Luft ist mittels eines Reinigungsluftstromes aus dem Filter austreibbar, wobei die Aktivkohle in Berührungskontakt zu einer temperaturgeregelten oder temperaturgesteuerten Heizung steht, mit der die Aktivkohle und die in dem Filter befindliche Luft erwärmt werden, während der Reinigungsluftstrom den Filter durchströmt.

Aus der DE 38 19 002 A1 ist ein Filter zur Beseitigung von Gerüchen und Schadstoffen bekannt, die über die Belüftungsanlage in Fahrzeugkabinen eindringen. Das Filtermaterial ist als Kassette ausgebildet, die in den Luftstrom der Belüftungsanlage eingeschoben wird und problemlos ausgewechselt werden kann und besteht aus einem Trägermaterial aus PU-Schaum, an dessen äußerer und innerer Oberfläche mittels einer Haftmasse Adsorberteilchen aus polymerem Material fixiert sind.

Aus der DE 10 2017 201 367 A1 geht eine Einrichtung zur Reinigung von in einem geschlossenen Raum befindlicher, mit CO₂ beladener Luft hervor, die eine Adsorptionseinrichtung zum Adsorbieren von CO₂ aus der der Adsorptionseinrichtung zugeführten Luft, eine der Adsorptionseinrichtung zugeordnete Desorptionseinrichtung zum Desorbieren von adsorbiertem CO₂, sowie eine Abführeinrichtung zum Abführen des desorbierten CO₂ umfasst.

Die DE 10 2018 000 378 A1 betrifft ein System und ein Verfahren zur Verwertung von in Verbrennungsmotoren gebildeten Stickoxiden, mit denen die Stickoxide zur Herstellung von flüssigen oder festen Chemikalien genutzt werden können.

Aus der US 2015/375602 A1 ist eine Luftfilteranordnung zum Filtern von Luft in einem Fahrzeug bekannt, die ein Gehäuse umfasst, das innerhalb eines Fahrzeugs positioniert werden kann. Ein erster Filter und ein zweiter Filter, der eine Vielzahl von Filtermedien umfasst, sind mit dem Gehäuse gekoppelt. Ein Lüfter drückt Luft durch den ersten und zweiten Filter, so dass in der Luft enthaltene Partikel im Fahrzeug gefiltert werden.

Die JP 2012 200592 A betrifft eine Vorrichtung zur Entfernung giftiger Substanzen, umfassend eine Vorverarbeitungseinheit, die in einem Pfad angeordnet ist, durch den die Luft des Behandlungsobjekts, die die giftige Gaskomponente enthält, geleitet wird, und eine Nachverarbeitungseinheit, die auf der stromabwärtigen Seite der Vorverarbeitungseinheit angeordnet ist. Die Vorverarbeitungseinheit enthält ein poröses Adsorptionsmittel zum Adsorbieren der giftigen Gaskomponenten in der Luft des Behandlungsobjekts, einen Photokatalysator und eine Ultraviolettlampe zum Bestrahlen des Photokatalysators mit Ultraviolettstrahlen. Die Nachverarbeitungseinheit weist eine Dampf-Flüssigkeits-Kontakteinheit auf, um die durch die Vorverarbeitungseinheit behandelte Luft des Behandlungsobjekts mit Wasser in Kontakt zu bringen, und eine elektrolytische Behandlungseinheit, die mit einer Elektrode versehen ist, um das Wasser elektrochemisch zu behandeln, das im Dampf-Flüssigkeits-Kontaktabschnitt mit der Luft des Behandlungsobjekts in Kontakt gekommen ist.

Die DE 28 20 313 A1 offenbart ein Filterpad für die Luftansaugkanäle zum Fahrgastraum von Kraftfahrzeugen, bestehend aus einem quadratischen, flachen Kissen, das an den Rändern durch einen Klebestreifen verstärkt ist. Dies dient gleichzeitig zur Fixierung des Pads am Ansaugkanal. Das Kissen ist mit einer mehrere Zentimeter dicken Schicht eines Chemikalienabsorbers, z. B. geblähtem Perlit, gefüllt, der in Natronlauge getränkt und mit Kalk und Kupferstaub beschichtet oder mit Aktivkohle vermischt ist.

Die DE 30 28 433 A1 offenbart eine Vorrichtung zur Abscheidung saurer Gase wie SO₂, NOx, Kohlenwasserstoffen sowie fester Stoffe aus der Luft. Bei dieser Vorrichtung wird die verunreinigte Luft entweder durch zwei Chemisorptionsmassen, einen Katalysator sowie Heiz- und Kühlelemente hindurchgedrückt oder hindurchgesaugt.

Vor diesem Hintergrund hat sich die Erfindung die Aufgabe gestellt, Vorrichtungen und Verfahren zur Verfügung zu stellen, mit denen Stickoxide aus Innenraumluft entfernt werden und die entfernten Stickoxide später einer stofflichen Weiterverwendung zugeführt werden können.

Die Aufgabe wird erfindungsgemäß gelöst durch Vorrichtungen mit den Merkmalen des Anspruchs 1, des Anspruchs 6 bzw. des Anspruchs 7, und ein Verfahren mit den Merkmalen des Anspruchs 10. Ausgestaltungen und Weiterbildungen der Erfindung ergeben sich aus den abhängigen Ansprüchen, der Beschreibung und den Abbildungen.

Gegenstand der Erfindung ist eine Filtereinheit zur Entfernung von Stickoxiden aus der Luft in einem geschlossenen Raum (Innenraumluft). Die Filtereinheit umfasst ein geschlossenes Gehäuse, welches an einem Ende ein Rohr zur Einleitung von Luft in die Filtereinheit und an einem gegenüberliegenden Ende ein Rohr zur Ausleitung von Luft aus der Filtereinheit aufweist, wobei in den Rohren jeweils Lüfter angeordnet sind. Die Rohre sind jeweils mit einer Druckkammer in dem Gehäuse verbunden. Zwischen den Drucckammern sind mindestens zwei Granulatkammern angeordnet, die ein zur Adsorption von Stickoxiden befähigtes Adsorbergranulat enthalten. Die mindestens zwei Granulatkammern sind jeweils durch eine Zwischeneinlage bzw. Filtereinlage voneinander getrennt.

In einer Ausführungsform ist der geschlossene Raum ein Fahrzeuginnenraum, insbesondere eine Fahrgastzelle. In einer anderen Ausführungsform ist der geschlossene Raum ein Raum innerhalb eines Gebäudes, beispielsweise ein Wohnraum oder eine Garage.

In einer Ausführungsform hat das Gehäuse die Form eines geschlossenen Zylinders. Die Rohre zur Einleitung von Luft in die Filtereinheit und zur Ausleitung von Luft aus der Filtereinheit können radial oder axial am Gehäuse angeordnet sein. Die Lüfter können nach Wahl im Saugbetrieb oder im Druckbetrieb arbeiten.

Die Filtereinheit umfasst mindestens zwei Granulatkammern. In einer Ausführungsform umfasst die Filtereinheit drei Granulatkammern. Die Anzahl der Granulatkammern in der Filtereinheit und die Aufteilung des Innenvolumens der Filtereinheit können je nach Einsatzgebiet variieren. Die Anwesenheit mehrerer Granulatkammern innerhalb der Filtereinheit erlaubt es, in einer Filtereinheit unterschiedliche Adsorbergranulate vorzusehen. Die Adsorbergranulate können sich dabei in ihrer Körnung und/oder ihrer chemischen Zusammensetzung voneinander unterscheiden.

In einer Ausführungsform umfasst das Adsorbergranulat mindestens einen Zeolithen. Zeolithe, die Stickoxide adsorbieren können, sind dem Fachmann im Prinzip bekannt. Beispiele umfassen ZSM-5, Zeolith Y und Mordenit.

In einer anderen Ausführungsform umfasst das Adsorbergranulat Alkalioxide oder Erdalkalioxide oder Alkalicarbonate oder Erdalkalicarbonate, gegebenenfalls auf einem granulären Trägermaterial. In einer speziellen Ausführungsform umfasst das Adsorbergranulat Bariumoxid, gegebenenfalls in Kombination mit Platin und Rhodium.

Die erfindungsgemäße Filtereinheit ist mit Adsorbergranulat befüllt, das einfach ausgetauscht und recycelt werden kann. Die Filtereinheit kann sowohl zur Filterung von dem Innenraum zugeführter Frischluft als auch zur Filterung der Innenraumluft eingesetzt werden und wird entsprechend in der Luftzufuhr oder im Innenraum platziert. Durch den Einsatz der Filtereinheit kann eine dauerhafte Reduktion der NOₓ-Konzentration im Innenraum erreicht werden.

In einer Ausführungsform sind die Filtereinheit und/oder das Adsorbergranulat dafür vorgesehen, nach Gebrauch getauscht und wieder aufbereitet zu werden. Das Adsorbergranulat kann einfach entnommen und ausgetauscht werden, beispielsweise wenn die Filtereinheit mit NOₓ gesättigt ist. Das Granulat kann recycelt werden, indem die NOₓ Moleküle beispielsweise durch Wärme vom Granulat abgetrennt werden. Der entstehende NOₓ-Gasstrom wird aufgefangen und Umsetzungsprozessen zugeführt.

In einer Ausführungsform ist die Filtereinheit portabel, so dass sie variabel in verschiedenen Innenräumen eingesetzt werden kann. Beispielsweise könnte sie wahlweise im Innenraum eines Fahrzeugs oder in einem Gebäude eingesetzt werden.

Gegenstand der Erfindung ist auch eine Anordnung zur Reduktion des Stickoxidgehaltes (NOₓ-Gehaltes) der Luft in einem geschlossenen Raum, umfassend eine Zuführanlage für Umgebungsluft in den geschlossenen Raum und/oder eine Umluftanlage zum Umwälzen von im geschlossenen Raum befindlicher Luft, wobei die Zuführanlage und/oder die Umluftanlage einen Stickoxidfilter zur Reduktion des Stickoxidgehaltes zugeführter Umgebungsluft umfassen. Erfindungsgemäß umfasst wenigstens ein Stickoxidfilter eine erfindungsgemäße Filereinheit mit einem Adsorbergranulat für NOₓ.

In einer Ausführungsform umfasst die Anordnung sowohl eine Zuführanlage für Umgebungsluft in den geschlossenen Raum als auch eine Umluftanlage zum Umwälzen von im geschlossenen Raum befindlicher Luft. In einer weiteren Ausführungsform umfassen sowohl die Zuführanlage als auch die Umluftanlage eine erfindungsgemäße Filtereinheit.

In einer Ausführungsform ist der geschlossene Raum ein Fahrzeuginnenraum, insbesondere eine Fahrgastzelle. In einer anderen Ausführungsform ist der geschlossene Raum ein Raum innerhalb eines Gebäudes, beispielsweise ein Wohnraum oder eine Garage.

Gegenstand der Erfindung ist auch ein Kraftfahrzeug mit einem Innenraum und einer Klimaanlage für den Innenraum, worin die Klimaanlage eine erfindungsgemäße Anordnung umfasst.

In einer Ausführungsform umfasst das Kraftfahrzeug eine erfindungsgemäße Anordnung mit zwei Filtereinheiten, nämlich einer ersten Filtereinheit (Frischluftfilter), die in einem Laubfang oder in einem Wasserkasten des Kraftfahrzeugs angeordnet ist und in das Kraftfahrzeug eingesaugte Luft vor Eintritt in die Klimaanlage filtert, und einer zweiten Filtereinheit (Innenraumfilter), die in einer Fahrgastzelle des Kraftfahrzeugs angeordnet ist und die Innenraumluft filtert.

In einer Ausführungsform umfasst das Kraftfahrzeug eine Steuerungselektronik, welche auch dafür vorgesehen ist, die erfindungsgemäße Anordnung anzusteuern. In einer weiteren Ausführungsform sind die Filtereinheiten separat mittels einer Software-Applikation ("App") steuerbar. In einer Ausführungsform ist die App auf einem mobilen Endgerät eines Nutzers, beispielsweise einem Laptop, Tablet oder Smartphone installiert. In einer anderen Ausführungsform ist die App Bestandteil einer Benutzeroberfläche der Bordelektronik des Kraftfahrzeugs.

Gegenstand der Erfindung ist auch ein Verfahren zur Entfernung von Stickoxiden aus der Luft in einem geschlossenen Raum, bei dem Umgebungsluft durch mindestens eine erfindungsgemäße Filtereinheit geleitet und dann dem geschlossenen Raum zugeführt wird. In einer Ausführungsform des Verfahrens ist die Umgebungsluft Außenluft, die dem geschlossenen Raum zugeführt werden soll. In einer Ausführungsform des Verfahrens ist die Umgebungsluft in dem geschlossenen Raum befindliche Luft. In einer Ausführungsform des Verfahrens werden sowohl Außenluft, die dem geschlossenen Raum zugeführt werden soll, als auch die in dem geschlossenen Raum befindliche Luft jeweils durch eine erfindungsgemäße Filtereinheit geleitet.

In einer Ausführungsform ist der geschlossene Raum ein Fahrzeuginnenraum, insbesondere eine Fahrgastzelle. In einer anderen Ausführungsform ist der geschlossene Raum ein Raum innerhalb eines Gebäudes, beispielsweise ein Wohnraum oder eine Garage.

Durch den Einsatz der erfindungsgemäßen Anordnung wird permanent eine gute und frische Luft für die Insassen des Fahrzeugs generiert. Das in den Kartuschen eingesetzte Adsorbergranulat kann nach Sättigung mit NOₓ einfach entnommen und ausgetauscht werden. Das Granulat kann recycelt und das desorbierte NOₓ einer stofflichen Verwendung zugeführt werden. Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand einer Ausführungsform in den Abbildungen schematisch dargestellt und wird unter Bezugnahme auf die Abbildungen weiter beschrieben. Es zeigt:
- Figur 1: eine schematische Darstellung eines Kraftfahrzeugs mit einer Ausführungsform der erfindungsgemäßen Innenraumluftreinigung;
- Figur 2: ein Diagramm von gemessenen Stickoxidgehalten während einer Messfahrt des Kraftfahrzeugs aus Figur 1;
- Figur 3: eine schematische Darstellung einer Ausführungsform einer erfindungsgemäßen Filtereinheit.

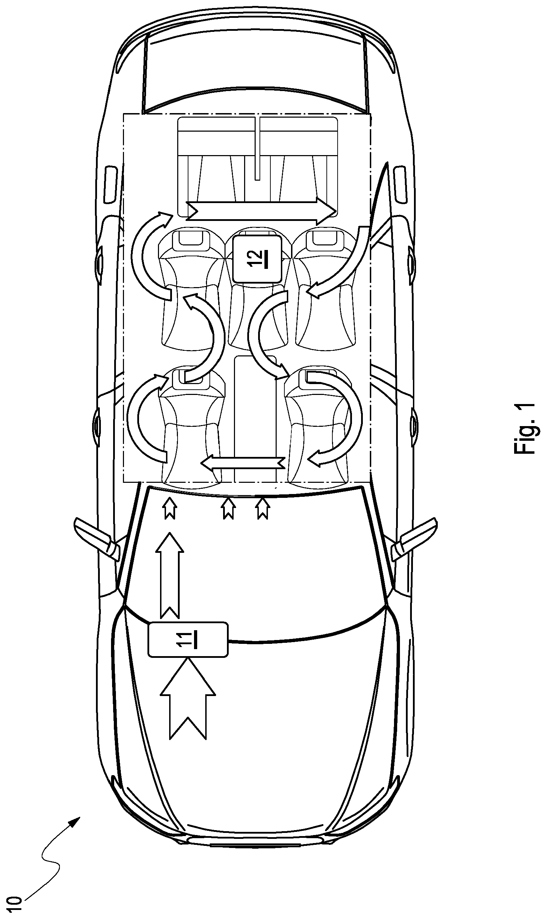

Figur 1 zeigt ein Kraftfahrzeug 10 mit einer Ausführungsform der erfindungsgemäßen Anordnung zur Innenraumluftreinigung. Es kommen zwei Filterkartuschen 11, 12 zum Einsatz, ein Frischluftfilter 11, der beispielsweise im Laubfang oder im Wasserkasten des Kraftfahrzeugs angeordnet ist, und eine Innenraumfilterung 12, die in der Fahrgastzelle angeordnet ist, beispielsweise im Bereich der Rücksitze.

Im Frischluftfilter 11 erfolgt eine kontinuierliche Filterung der angesaugten Luft vor Eintritt in die Klimaanlage durch ein oder mehrere adsorbierende Filtergranulate (500 - 2000 ml), welche(s) spezifisch NOₓ Moleküle zurückhält bzw. zurückhalten. Bei einmaliger Durchströmung des Granulats werden ca. 95 % der Stickoxide aus der Luft entfernt.

Im Innenraumfilter 12 erfolgt eine kontinuierliche Filterung der Innenraumluft durch ein bzw. mehrere adsorbierende Filtergranulate (1000 - 2000 ml). Die Innenraumluft wird mehrfach durch das Granulat gefiltert, die NOₓ Aufnahmerate liegt insgesamt bei ca. 90%. Der Innenraumfilter kann fest montiert sein oder auch entnehmbar montiert werden, so dass er beim Verlassen des Fahrzeugs mitgeführt werden und in häuslicher Umgebung zum Einsatz kommen kann.

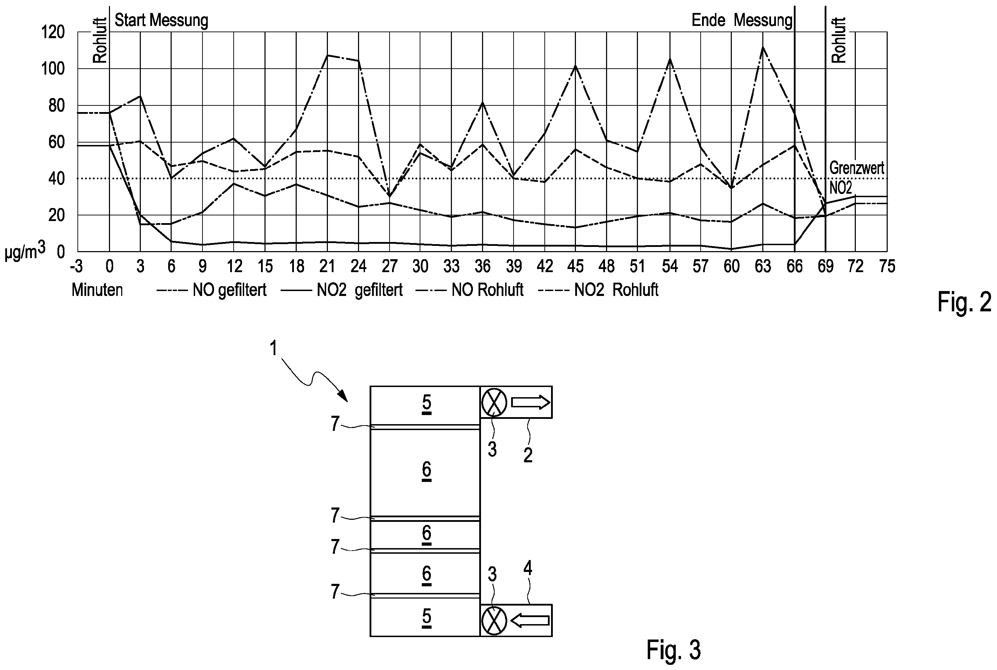

Figur 2 zeigt die Ergebnisse von während einer Messfahrt mit dem in Fig. 1 dargestellten Kraftfahrzeug durchgeführten Stickoxidmessungen. Es ist sehr gut zu erkennen, dass in der dem Kraftfahrzeug zugeführten Außenluft (Rohluft) die Grenzwerte von NO₂ im Bereich der Messfahrt überwiegend überschritten werden. Die Belastung der Fahrzeuginsassen wäre konstant sehr hoch. Durch den Einsatz des im Laubfang angeordneten Frischluftfilters 11 und im Innenraum angeordneten Innenraumfilters 12 wird die NO₂ Belastung erheblich gemindert. Mit dem Einsatz des Innenraumfilters 12 wird auch die NO Belastung merklich reduziert. Somit kann sich deutlich weniger neues NO₂ im Fahrzeuginnenraum bilden.

Figur 3 zeigt schematisch den Aufbau einer Ausführungsform der erfindungsgemäßen Filtereinheit 1. Das zylindrische Gehäuse der Filtereinheit 1 weist an seinem einen Längsende einen Lufteinlass 4 für Schadstoffe enthaltende Luft auf, der radial oder axial angeordnet sein kann. Im Lufteinlass 4 ist ein Lüfter 3 angeordnet, der variabel im Saug- oder Druckbetrieb eingesetzt werden kann. Am anderen Längsende des Gehäuses ist ein Luftauslass 2 für gereinigte Luft vorgesehen, der ebenfalls radial oder axial angeordnet sein kann. Im Luftauslass 2 ist ebenfalls ein Lüfter 3 angeordnet, der variabel im Saug- oder Druckbetrieb eingesetzt werden kann.

Im Inneren weist die Filtereinheit 1 an beiden Enden jeweils eine Druckkammer 5 auf, die zur Homogenisierung der in die Filtereinheit 1 eintretenden bzw. sie verlassenden Luft dient und einen gleichmäßigen Gasstrom über den gesamten Querschnitt der Filtereinheit 1 sicherstellt. Die dargestellte Filtereinheit 1 weist drei Granulatkammern 6 auf, die voneinander bzw. von den Druckkammern 5 durch Filtereinlagen 7 getrennt sind. In einer Ausführungsform handelt es sich bei den Filtereinlagen 7 um Edelstahl- oder Drahtsiebe, in einer anderen Ausführungsform um Kunststoffsiebe. Die Filtereinlagen 7 weisen eine Maschenweite auf, die kleiner ist als der Teilchendurchmesser der Granulatpartikel in den Granulatkammern 6. Die Filtereinlagen 7 verhindern, dass sich die Granulate aus den verschiedenen Granulatkammern 6 vermischen. Die Anzahl der Granulatkammern 6 und die Aufteilung innerhalb der Filtereinheit 1 können je nach Einsatz variabel gestaltet werden.

### Bezugszeichenliste

- 1: Filtereinheit mit Gehäuse
- 2: Auslass Filterluft
- 3: Lüfter
- 4: Einlass Schadluft
- 5: Druckkammer
- 6: Granulatkammer
- 7: Zwischeneinlage/Filtereinlage
- 10: Kraftfahrzeug
- 11: Kartusche
- 12: Innenraumfilter

## Patentansprüche

1. Filtereinheit (1) mit einem geschlossenes Gehäuse, welches an einem Ende ein Rohr (4) zur Einleitung von Luft in die Filtereinheit (1) und an einem gegenüberliegenden Ende ein Rohr (2) zur Ausleitung von Luft aus der Filtereinheit aufweist, wobei in den Rohren (2, 4) jeweils Lüfter (3) angeordnet sind, und wobei die Rohre (2, 4) jeweils mit einer Drucckammer (5) in dem Gehäuse verbunden sind, und **dadurch gekennzeichnet, dass** zwischen den Druckkammern (5) mindestens zwei Granulatkammern (6) angeordnet sind, die ein zur Adsorption von Stickoxiden befähigtes Adsorbergranulat enthalten, und wobei die mindestens zwei Granulatkammern (6) jeweils durch eine Zwischeneinlage/Filtereinlage (7) voneinander getrennt sind.

2. Filtereinheit (1) nach Anspruch 1, worin das Gehäuse die Form eines geschlossenen Zylinders hat und die Rohre (2, 4) radial am Gehäuse angeordnet sind.

3. Filtereinheit (1) nach Anspruch 1, worin das Gehäuse die Form eines geschlossenen Zylinders hat und die Rohre (2, 4) axial am Gehäuse angeordnet sind.

4. Filtereinheit (1) nach einem der Ansprüche 1 bis 3, worin das Adsorbergranulat mindestens einen Zeolithen umfasst.

5. Filtereinheit (1) nach einem der Ansprüche 1 bis 4, worin die Filtereinheit (1) und/oder das Adsorbergranulat dafür vorgesehen sind, nach Gebrauch getauscht und wieder aufbereitet zu werden.

6. Anordnung zur Reduktion des Stickoxidgehaltes der Luft in einem geschlossenen Raum, umfassend eine Zuführanlage für Umgebungsluft in den geschlossenen Raum und/oder eine Umluftanlage zum Umwälzen von im geschlossenen Raum befindlicher Luft, wobei die Zuführanlage und/oder die Umluftanlage einen Stickoxidfilter zur Reduktion des Stickoxidgehaltes zugeführter Umgebungsluft umfassen, wobei wenigstens ein Stickoxidfilter eine Filereinheit (1) nach einem der voranstehenden Ansprüche umfasst.

7. Kraftfahrzeug (10) mit einem Innenraum und einer Klimaanlage für den Innenraum, welches eine Anordnung nach Anspruch 6 umfasst.

8. Kraftfahrzeug (10) nach Anspruch 7, worin die Anordnung eine erste Filtereinheit (11) umfasst, die in einem Laubfang oder in einem Wasserkasten des Kraftfahrzeugs (10) angeordnet ist und in das Kraftfahrzeug eingesaugte Luft vor Eintritt in die Klimaanlage filtert, und eine zweite Filtereinheit (12), die in einer Fahrgastzelle des Kraftfahrzeugs (10) angeordnet ist und die Innenraumluft filtert.

9. Kraftfahrzeug nach Anspruch 7 oder 8, das eine Steuerungselektronik umfasst, welche dafür eingerichtet ist, die Anordnung anzusteuern.

10. Verfahren zur Entfernung von Stickoxiden aus der Luft in einem geschlossenen Raum, bei dem Umgebungsluft durch mindestens eine Filtereinheit (1) nach einem der Ansprüche 1 bis 5 geleitet und dann dem geschlossenen Raum zugeführt wird.

## Claims

1. Filter unit (1) having a closed housing which has at one end a pipe (4) for introducing air into the filter unit (1) and at an opposing end a pipe (2) for discharging air from the filter unit, wherein fans (3) are arranged in each case in the pipes (2, 4), and wherein the pipes (2, 4) are in each case connected to a pressure chamber (5) in the housing, and **characterized in that** between the pressure chambers (5) at least two granulate chambers (6) which contain an adsorber granulate which is capable of adsorption of nitrogen oxides are arranged, and wherein the at least two granulate chambers (6) are in each case separated from each other by means of an intermediate inlay/filter inlay (7).

2. Filter unit (1) according to claim 1, wherein the housing is in the form of a closed cylinder and the pipes (2, 4) are arranged radially on the housing.

3. Filter unit (1) according to claim 1, wherein the housing is in the form of a closed cylinder and the pipes (2, 4) are arranged axially on the housing.

4. Filter unit (1) according to any one of claims 1 to 3, wherein the adsorber granulate comprises at least one zeolite.

5. Filter unit (1) according to any one of claims 1 to 4, wherein the filter unit (1) and/or the adsorber granulate are provided to be replaced and prepared again after use.

6. Arrangement for reducing the nitrogen oxide content of the air in a closed space, comprising a supply installation for ambient air in the closed space and/or an ambient air installation for circulating air located in the closed space, wherein the supply installation and/or the ambient air installation comprise a nitrogen oxide filter for reducing the nitrogen oxide content of supplied ambient air, wherein at least one nitrogen oxide filter comprises a filter unit (1) according to any one of the preceding claims.

7. Motor vehicle (10) having an interior and an air-conditioning unit for the interior which comprises an arrangement according to claim 6.

8. Motor vehicle (10) according to claim 7, wherein the arrangement comprises a first filter unit (11) which is arranged in a leaf trap or in a water tank of the motor vehicle (10) and filters air drawn into the motor vehicle before entering the air-conditioning system, and a second filter unit (12) which is arranged in a passenger compartment of the motor vehicle (10) and filters the interior air.

9. Motor vehicle according to claim 7 or 8, which comprises an electronic control system which is configured to control the arrangement.

10. Method for removing nitrogen oxides from the air in a closed space, in which ambient air is directed through at least one filter unit (1) according to any one of claims 1 to 5, and is then supplied to the closed space.

## Revendications

1. Unité de filtration (1) avec un boîtier fermé qui présente à une extrémité un tube (4) pour introduire de l'air dans l'unité de filtration (1) et à une extrémité opposée un tube (2) pour évacuer de l'air hors de l'unité de filtration, dans laquelle des ventilateurs (3) sont agencés dans chacun des tubes (2, 4), et dans laquelle les tubes (2, 4) sont reliés respectivement à une chambre de pression (5) dans le boîtier, et **caractérisée en ce qu'**au moins deux chambres de granulat (6) sont agencées entre les chambres de pression (5), chambres qui contiennent un granulat adsorbant apte à l'adsorption d'oxydes d'azote et dans laquelle les au moins deux chambres de granulat (6) sont séparées l'une de l'autre respectivement par un insert intercalaire/insert de filtre (7).

2. Unité de filtration (1) selon la revendication 1, dans laquelle le boîtier présente la forme d'un cylindre fermé, et les tubes (2, 4) sont agencés radialement au niveau du boîtier.

3. Unité de filtration (1) selon la revendication 1, dans laquelle le boîtier présente la forme d'un cylindre fermé, et les tubes (2, 4) sont agencés axialement au niveau du boîtier.

4. Unité de filtration (1) selon l'une quelconque des revendications 1 à 3, dans laquelle le granulat adsorbant comprend au moins une zéolithe.

5. Unité de filtration (1) selon l'une quelconque des revendications 1 à 4, dans laquelle l'unité de filtration (1) et/ou le granulat adsorbant sont prévus afin d'être échangés après usage et retraités.

6. Ensemble destiné à réduire la teneur en oxyde d'azote de l'air dans un espace fermé, comprenant une installation d'amenée pour de l'air ambiant dans l'espace fermé et/ou une installation de circulation d'air pour le brassage d'air se trouvant dans l'espace fermé, dans lequel l'installation d'amenée et/ou l'installation de circulation d'air comprennent un filtre d'oxyde d'azote pour réduire la teneur en oxyde d'azote de l'air ambiant amené, dans lequel au moins un filtre d'oxyde d'azote comprend une unité de filtration (1) selon l'une quelconque des revendications précédentes.

7. Véhicule automobile (10) avec un espace intérieur et une installation de climatisation pour l'espace intérieur qui comporte un ensemble selon la revendication 6.

8. Véhicule automobile (10) selon la revendication 7, dans lequel l'ensemble comprend une première unité de filtration (11) qui est agencée dans un élément de collecte de feuilles ou dans un réservoir d'eau du véhicule automobile (10) et filtre de l'air aspiré dans le véhicule automobile avant l'entrée dans l'installation de climatisation, et une seconde unité de filtration (12) qui est agencée dans un habitacle du véhicule automobile (10) et filtre l'air de l'espace intérieur.

9. Véhicule automobile selon la revendication 7 ou 8, qui comprend une électronique de commande qui est conçue afin de commander l'ensemble.

10. Procédé destiné à éliminer des oxydes d'azote de l'air dans un espace fermé, pour lequel de l'air ambiant est acheminé à travers au moins une unité de filtration (1) selon l'une quelconque des revendications 1 à 5 et est ensuite amené dans l'espace fermé.
